# EUROPÄISCHE PATENTSCHRIFT

(11) **EP 3 960 929 B1**
(45) Veröffentlichungstag und Bekanntmachung des Hinweises auf die Patenterteilung: **13.12.2023**
(21) Anmeldenummer: 20192846.2
(22) Anmeldetag: 26.08.2020
(51) Int. Cl.: D06N 7/00, B32B 27/08

(54) **VERFAHREN ZUR HERSTELLUNG EINES KUNSTRASENS**
METHOD FOR MANUFACTURING ARTIFICIAL LAWN
PROCÉDÉ DE FABRICATION DE GAZON ARTIFICIEL

(43) Veröffentlichungstag der Anmeldung: 02.03.2022
(73) Patentinhaber: Tarkett Sports Canada Inc., Montréal, Québec H4T 1G2 (CA)
(72) Erfinder: MORTON-FINGER, Jürgen, 69469 Weinheim (DE); BERGHAUS, Ulrich, 53844 Troisdorf (DE); RANDALL, Gregory T., Dalton, GA 30720 (US)
(74) Vertreter: Betten & Resch

(56) Entgegenhaltungen:
- JP-A- H11 241 308
- US-A1- 2013 101 756
- US-A1- 2020 223 196
- US-B1- 7 364 634

## Beschreibung

Die vorliegende Erfindung betrifft einen Kunstrasen sowie ein Verfahren zu seiner Herstellung.

Herkömmliche Kunststoff-Kunstrasen bestehen im Wesentlichen aus Fasern, die in einen mehrschichtigen Verbund, bestehend aus Gewebe, Verstärkungsgitter und Vlies-Stoffen, eingearbeitet werden. Solche Kunstrasen umfassten bisher eine Vielzahl verschiedenartiger Materialarten, wie zum Beispiel Polyethylen (PE) oder Polypropylen (PP) im Untergrundmaterial oder in den Kunstrasenfasern sowie Latex oder Polyurethan (PU) für Beschichtungen zum Beispiel zur Befestigung der Fasern. Eine solche Vielzahl verschiedenartiger Materialarten in einem Kunstrasenprodukt verschlechtert die Recycelbarkeit nach dem Ende seiner Lebensdauer, was wiederum zu einer schlechteren Umweltbilanz, einem erhöhten gesamten Energieaufwand und CO2-Ausstoß sowie zu erhöhten gesamten Lebenszykluskosten führt. In den Jahren 2010 bis 2012 gab es bereits erste Entwicklungen zu Kunstrasen ohne Latex bzw. Polyurethan. Eine großtechnische Umsetzung und Markteinführung dieser Entwicklungsprodukte hat es jedoch nicht gegeben.

Dokument US 2013/101756 A1 betrifft eine Kunstrasenstruktur, sowie eine Vorrichtung und ein Verfahren zur Herstellung eines Kunstrasens.

Dokument JP H11 241308 A betrifft einen Kunstrasen, bei dem ein Vliesstoff auf der Rückseite eines Grundgewebes polymerisiert wird, um die Übertragung von Wärme auf die Seite des Grundgewebes zu unterdrücken, wenn der hintere Maschenabschnitt des Flors erhitzt und geschmolzen wird, sowie ein Verfahren zur Herstellung desselben.

Dokument US 7 364 634 B1 betrifft Teppichprodukte mit einem Sekundärrücken mit einer Folie, einem Gewebe oder einem Laminat enthalten, das auf die Rückseite des Primärrückens aufgebracht wird.

Dokument US 2020/223196 A1 betrifft Teppiche und Teppichprodukte, die eine Rohware und eine Klebeschicht mit einer Schmelzkleberzusammensetzung umfassen.

Mehrschichtige Kunstrasen sowie Verfahren zur Herstellung derselben sind aus dem Stand der Technik bekannt. Beispielsweise ist aus der WO 2019/222610 A1 eine Teppichzusammensetzung mit laminiertem Folienrücken und ein Verfahren zur Herstellung derselben bekannt. Bei dem hierbei bereitgestellten Verfahren wird der Zusammenhalt zwischen den Fasern und einem Untergrundmaterial dadurch geschaffen, dass eine Folie/Beschichtung auf die Schlaufen der Fasern an der Hinterseite des Untergrundmaterials laminiert und geschmolzen wird, um die Fasern in Position zu halten.

Nachteilig bei dem in der WO 2019/222610 A1 beschriebenen Verfahren zur Herstellung eines Kunstrasens ist, dass die Verbindung der Fasern mit dem Untergrundmaterial ausschließlich über die zugeführte Folie/Beschichtung erzeugt wird, indem die Folie sich jeweils mit dem Untergrundmaterial und den rückseitigen Faserabschnitten verbindet. Die rückseitigen Faserabschnitte werden daher über den Umweg der Folie indirekt mit dem Untergrundmaterial verbunden. Die Folie ist somit zwingend erforderlich für die Herstellung des Kunstrasens, da ansonsten die Fasern einfach aus dem Untergrundmaterial herausgezogen werden könnten. Aufgrund dieser zwingenden Erfordernis einer Folie wird die Prozesskomplexität erhöht. Da die Folie oftmals aus anderen Materialien besteht als das Untergrundmaterial oder die Fasern, wird die Recycelbarkeit des Kunstrasens erschwert bzw. unmöglich gemacht, was insbesondere die Umweltbilanz solcher Kunstrasen negativ beeinflusst. Darüber hinaus erhöht dies die über die gesamte Lebensdauer des Kunstrasens benötigte Energie sowie den damit verbundenen COz-Ausstoß.

Es ist daher eine Aufgabe der vorliegenden Erfindung, ein Verfahren zur Herstellung eines Kunstrasens mit einem einfachen, kurzen und kostengünstigen Verfahrensablauf bereitzustellen, mit dem Kunstrasen von hoher Qualität und Recycelbarkeit hergestellt werden können. Es ist ferner eine Aufgabe der vorliegenden Erfindung, einen Kunstrasen bereitzustellen, der eine hohe Qualität und Recycelbarkeit aufweist und mit dem erfindungsgemäßen Verfahren hergestellt wird.

Diese Aufgabe wird erfindungsgemäß durch ein Verfahren zur Herstellung eines Kunstrasens nach Anspruch 1 sowie durch einen Kunstrasen nach Anspruch 9 gelöst. Bevorzugte Ausführungsformen der Erfindung sind in den Unteransprüchen beschrieben.

Offenbart wird ein Verfahren umfassend die folgenden Schritte: Bereitstellen eines Trägermaterials mit einer Oberseite und einer Unterseite, Bereitstellen von einer Vielzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, Zuführen des Trägermaterials mit den Fasern zu einer beheizten rotierenden Kalanderwalze, Führen des Trägermaterials mit den Fasern über zumindest einen Teilbereich der Oberfläche der beheizten rotierenden Kalanderwalze, wobei die verbundenen Bereiche der Fasern und die Unterseite des Trägermaterials der Kalanderwalze zugewandt sind, während des Führens des Trägermaterials mit den Fasern über den zumindest einen Teilbereich der Oberfläche der beheizten rotierenden Kalanderwalze: Übertragen von Wärme von der beheizten rotierenden Kalanderwalze zu dem Trägermaterial mit den Fasern, und Verschmelzen der verbundenen Bereiche der Fasern mit der Unterseite des Trägermaterials zu dem Kunstrasen, und Abführen und Abkühlen des Kunstrasens.

Bei dem Verfahren wird der Zusammenhalt zwischen den Fasern und dem Trägermaterial dadurch erzeugt, dass die Fasern direkt mit dem Trägermaterial an den verbundenen Bereichen der Fasern verschmolzen werden. Somit wird insbesondere ein einfacher, kompakter und stabiler Aufbau des Kunstrasens gewährleistet und es wird insbesondere keine zusätzliche Folie benötigt, um die Fasern mit dem Trägermaterial zu verbinden. Ferner kann dadurch der Materialverbrauch reduziert und die Recycelbarkeit des Kunstrasens erhöht werden, da der Kunstrasen weniger einzelne Komponenten enthält und die Verbindung zwischen Fasern und Trägermaterial ohne zusätzliche Komponenten erzeugt wird. Da lediglich das Trägermaterial mit der Vielzahl von Fasern über die Kalanderwalze geführt werden und verschmolzen werden müssen, werden ebenfalls die Komplexität des Verfahrens und die Prozesszeit reduziert.

Vorzugsweise ist bei dem Schritt des Führens zumindest eine rotierende Anpresswalze um einen Kalanderspalt beabstandet und im Wesentlichen achsenparallel zu der Kalanderwalze angeordnet, wobei die Anpresswalze das Trägermaterial mit den Fasern gegen die beheizte rotierende Kalanderwalze mit einer vorbestimmten Anpresskraft presst.

Die um die Kalanderwalze angeordnete zumindest eine Anpresswalze führt das Trägermaterial mit den Fasern in einer vorbestimmten Position um zumindest einen Teilbereich der Oberfläche der beheizten rotierenden Kalanderwalze, wodurch die Prozessgenauigkeit erhöht werden kann und ein Verrutschen des Trägermaterials mit den Fasern verhindert wird. Hierdurch kann ein besonders gutes, d.h. gleichmäßiges Verschmelzen der Rückseite des Trägermaterials mit den verbundenen Bereichen der Fasern erreicht werden. Ferner kann durch das Einstellen des Kalanderspalts die Anpresskraft auf das Trägermaterial mit den Fasern angepasst werden, wodurch die Prozessgenauigkeit weiter verbessert werden kann und die Verbindung zwischen dem Trägermaterial und den Fasern gestärkt wird. Außerdem beschleunigt der Anpressdruck der Anpresswalzen das Verschmelzen zwischen den Fasern und dem Trägermaterial, wodurch mit geringeren Verweilzeiten auf der Kalanderwalze ähnliche Festigkeitswerte erreicht werden können und somit die Prozesszeit reduziert werden kann.

In einer bevorzugten Ausführungsform umfasst das Verfahren ferner einen Schritt des Bereitstellens einer Folie, wobei bei dem Schritt des Zuführens des Trägermaterials die Folie zwischen der Unterseite des Trägermaterials mit den verbundenen Bereichen der Fasern und der beheizten rotierenden Kalanderwalze zugeführt wird, und wobei bei dem Schritt des Übertragens von Wärme die Folie mit der Unterseite des Trägermaterials und mit den verbundenen Bereichen der Fasern verschmolzen wird.

Lokal wird die Folie sowohl mit der Unterseite des Trägermaterials als auch mit den verbundenen Bereichen der Fasern verschmolzen. Dadurch wird die Verbindung zwischen Trägermaterial und Fasern verstärkt und somit auch die Auszugfestigkeit der Fasern erhöht. Global, das heißt über den gesamten Kunstrasen hinweg betrachtet, verleiht die Folie dem Kunstrasen eine zusätzliche Stabilität. Unter "Stabilität" wird insbesondere die Zugfestigkeit und Dehnung (ermittelt in einem Zugversuch), die thermische Stabilität (ermittelt in einem Schrumpfversuch) sowie die Stabilität bei der Verlegung von Kunstrasenbahnen, insbesondere gegen Verzug und Falten des Kunstrasens bei einem breiten Außentemperaturbereich, verstanden.

Gemäß einem Aspekt ist bei dem Schritt des Führens zumindest eine rotierende Anpresswalze um einen Kalanderspalt beabstandet und im Wesentlichen achsenparallel zu der Kalanderwalze angeordnet, wobei die Anpresswalze das Trägermaterial mit den Fasern und der Folie gegen die beheizte rotierende Kalanderwalze mit einer vorbestimmten Anpresskraft presst.

Die um die Kalanderwalze angeordnete zumindest eine Anpresswalze führt das Trägermaterial mit den Fasern und die Folie in einer vorbestimmten Position um zumindest einen Teilbereich der Oberfläche der beheizten rotierenden Kalanderwalze, wodurch die Prozessgenauigkeit erhöht werden kann und ein Verrutschen des Trägermaterials mit den Fasern und der Folie verhindert wird. Ferner kann durch das Einstellen des Kalanderspalts die Anpresskraft auf das Trägermaterial mit den Fasern und der angepasst werden, wodurch die Prozessgenauigkeit ferner verbessert werden kann und die Verbindung zwischen dem Trägermaterial, den Fasern und der Folie weiter gestärkt wird.

Vorzugsweise sind das Trägermaterial und die Fasern aus im Wesentlichen derselben Materialart gebildet.

Die Verwendung von lediglich einer Materialart für das Trägermaterial und die Fasern verbessert die Recycelbarkeit des Kunstrasens, da keine andersartigen Materialien, wie zum Beispiel Latex, Polyurethan, etc. davon getrennt werden müssen. Darüber hinaus wird dadurch die Prozessführung und die Einstellung der Prozessparameter für die Herstellung des Kunstrasens vereinfacht, da aufgrund der Verwendung gleichartiger Materialien für Trägermaterial und die Fasern auch zum Beispiel ihre Schmelzpunkte ähnlich sind.

Ferner ist bevorzugt, dass das Trägermaterial und die Folie aus im Wesentlichen derselben Materialart gebildet sind.

Die Verwendung von lediglich einer Materialart für das Trägermaterial und die Folie verbessert die Recycelbarkeit des Kunstrasens, da keine andersartigen Materialien, wie zum Beispiel Latex, Polyurethan, etc. davon getrennt werden müssen. Darüber hinaus wird dadurch die Prozessführung und die Einstellung der Prozessparameter für die Herstellung des Kunstrasens vereinfacht, da aufgrund der Verwendung gleichartiger Materialien für Trägermaterial und die Folie auch zum Beispiel ihre Schmelzpunkte ähnlich sind.

In einer weiteren bevorzugten Ausführungsform umfasst das Trägermaterial recyceltes und recycelbares Material und/oder umfassen die Fasern recyceltes und recycelbares Material.

Die Verwendung von recyceltem bzw. recycelbarem Material für das Trägermaterial und/oder die Fasern verbessert die Umweltbilanz des Kunstrasens (insbesondere kann dadurch ein hohes Maß an Materialverbrauch, Energie und CO2-Ausstoß eingespart werden). Darüber hinaus können durch die Verwendung von recyceltem Material für das Trägermaterial und/oder die Fasern die Herstellungskosten für den Kunstrasen verringert werden, da anstelle von Neumaterial auch recyceltes Material aus z.B. altem Kunstrasen wiederverwendet werden kann. Ferner ermöglicht erst die Verwendung von recycelbarem Material das Recyceln des Kunstrasens nach dem Ende der Lebensdauer und somit das erneute Zuführen in den Materialkreislauf.

Die Folie kann recyceltes und/oder recycelbares Material umfassen.

Die Verwendung von recyceltem bzw. recycelbarem Material für die Folie verbessert ferner die Umweltbilanz des Kunstrasens (insbesondere kann dadurch ein hohes Maß an Materialverbrauch, Energie und CO2-Ausstoß eingespart werden). Darüber hinaus können durch die Verwendung von recyceltem Material für die Folie die Herstellungskosten für den Kunstrasen verringert werden, da anstelle von Neumaterial auch recyceltes Material (zum Beispiel alter Kunstrasen, auch genannt "end-of-life (EOL) turf") als Sekundärrohstoff bzw. Sekundärwerkstoff wiederverwendet werden kann. Ferner ermöglicht die Verwendung von recycelbarem Material das Recyceln des Kunstrasens nach dem Ende der Lebensdauer und somit das erneute Zuführen in den Materialkreislauf.

Vorzugsweise umfasst die Folie eine erste Schicht, eine zweite Schicht und eine dritte Schicht, wobei das Trägermaterial und die erste Schicht und die dritte Schicht aus im Wesentlichen derselben Materialart gebildet sind, wobei die zweite Schicht recycelten Kunstrasenabfall umfasst.

Mehrschichtige Folien, wobei die Schichten verschiede Materialarten umfassen, können beispielsweise mit dem Verfahren der Mehrschicht-Extrusion (Co-Extrusion) hergestellt werden. Die Verwendung von im Wesentlichen derselben Materialart für das Trägermaterial und die erste und dritte Schicht der Folie verbessert die Recycelbarkeit des Kunstrasens, da keine andersartigen Materialien, wie zum Beispiel Latex, Polyurethan, etc. enthalten sind. Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Gemäß einem Aspekt kann die Folie eine erste Schicht, eine zweite Schicht und eine dritte Schicht umfassen, wobei die erste Schicht ein Material mit modifizierten Adhäsionseigenschaften umfasst, wobei das Trägermaterial und die dritte Schicht aus im Wesentlichen demselben Material gebildet sind, und wobei die zweite Schicht recycelten Kunstrasenabfall umfasst.

Die Verwendung eines Materials mit modifizierten Adhäsionseigenschaften in der ersten Schicht, die der Unterseite des Trägermaterials zugewandt ist, erhöht die Adhäsionskraft zwischen der ersten Schicht und dem Trägermaterial sowie zwischen der ersten Schicht und den verbundenen Bereichen der Fasern und verbessert zudem die Auszugfestigkeit der Fasern. Dadurch, dass dieselbe Materialart für das Trägermaterial und die dritte Schicht der Folie verwendet wird, kann die Recycelbarkeit des Kunstrasens verbessert werden, da keine andersartigen Materialien, wie zum Beispiel Latex, Polyurethan, etc. darin enthalten sind. Somit kann auch die Umweltbilanz des Kunstrasens verbessert werden (insbesondere kann dadurch ein hohes Maß an Materialverbrauch, Energie und CO2-Ausstoß eingespart werden). Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Ferner wird ein Kunstrasen vorgeschlagen, umfassend: ein Trägermaterial mit einer Oberseite und einer Unterseite, eine Vielzahl von Fasern, wobei jede Faser zwei Enden umfasst, welche sich von der Oberseite des Trägermaterials erstrecken, und einen verbundenen Bereich umfasst, welcher an der Unterseite des Trägermaterials schlaufenartig angeordnet ist, wobei das Trägermaterial an der Unterseite mit den verbundenen Bereichen der Fasern verschmolzen ist.

Bei dem Kunstrasen wird der Zusammenhalt zwischen den Fasern und dem Trägermaterial dadurch erzeugt, dass die Fasern direkt mit dem Trägermaterial an den verbundenen Bereichen verschmolzen sind. Somit wird insbesondere ein einfacher Aufbau des Kunstrasens gewährleistet und es wird keine zusätzliche Folie benötigt, um die Fasern mit dem Trägermaterial zu verbinden und der Kunstrasen kann mit einem geringen Materialverbrauch hergestellt werden. Der Kunstrasen ist insbesondere durch einen einfachen Aufbau bei einer vergleichbaren Auszugfestigkeit charakterisiert. Ferner kann dadurch die Recycelbarkeit des Kunstrasens erhöht werden, da der Kunstrasen weniger einzelne Komponenten aus unterschiedlichen Materialarten enthält.

Vorzugsweise umfasst der Kunstrasen ferner eine Folie, wobei die Folie mit der Unterseite des Trägermaterials und mit den verbundenen Bereichen der Fasern verschmolzen ist.

Lokal ist die Folie sowohl mit der Unterseite des Trägermaterials als auch mit den verbundenen Bereichen der Fasern verschmolzen und verstärkt somit die Verbindung zwischen Trägermaterial und Fasern und damit die Auszugfestigkeit der Fasern. Global, das heißt über den gesamten Kunstrasen hinweg betrachtet, verleiht die Folie dem Kunstrasen eine zusätzliche Stabilität.

In einer bevorzugten Ausführungsform umfasst die Folie eine erste Schicht, eine zweite Schicht und eine dritte Schicht, wobei das Trägermaterial und die erste Schicht und die dritte Schicht aus im Wesentlichen demselben Material gebildet sind, wobei die zweite Schicht recycelten Kunstrasenabfall umfasst.

Die Verwendung von im Wesentlichen derselben Materialart für das Trägermaterial und die erste und dritte Schicht der Folie verbessert die Recycelbarkeit des Kunstrasens, da dadurch ein Großteil des Kunstrasens aus derselben Materialart besteht und wenige bzw. keine andersartigen Materialien, wie zum Beispiel Latex, Polyurethan, etc. enthalten sind. Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Das verschmutzte Abfallmaterial kann somit zwischen zwei im Wesentlichen reinen Schichten, d.h. nicht kontaminierten Schichten, eingebunden und stabilisiert werden. So kommt es bei dem Blasfolien-Prozess zum Beispiel nicht zu einem unerwünschten Platzen der Schlauchblase durch Schmutzpartikel. Somit können auch kontaminierte Materialen von z.B. alten Kunstrasen (Kunstrasenabfälle) in dem Kunstrasen verwendet werden, was neben den vorstehend beschriebenen Vorteilen auch die Umweltbilanz des Kunstrasens ferner verbessert, da Material von älteren Kunstrasen effizient wiederverwendet wird. Insbesondere kann dadurch ein hohes Maß an Energie und CO2-Ausstoß eingespart werden.

In einer alternativen bevorzugten Ausführungsform umfasst die Folie eine erste Schicht, eine zweite Schicht und eine dritte Schicht, wobei die erste Schicht ein Material mit modifizierten Adhäsionseigenschaften umfasst, wobei das Trägermaterial und die dritte Schicht aus im Wesentlichen demselben Material gebildet sind, und wobei die zweite Schicht recycelten Kunstrasenabfall umfasst.

Die Verwendung eines Materials mit modifizierten Adhäsionseigenschaften für die erste Schicht, die der Unterseite des Trägermaterials zugewandt ist, erhöht die Adhäsionskraft zwischen der ersten Schicht und dem Trägermaterial sowie zwischen der ersten Schicht und den verbundenen Bereichen der Fasern und verbessert zudem die Auszugfestigkeit der Fasern. Dadurch, dass dieselbe Materialart für das Trägermaterial und die dritte Schicht der Folie verwendet wird, kann die Recycelbarkeit des Kunstrasens verbessert werden, da keine andersartigen Materialien, wie zum Beispiel Latex oder Polyurethan darin enthalten sind. Somit kann auch die Umweltbilanz des Kunstrasens verbessert werden (insbesondere kann dadurch ein hohes Maß an Energie und CO2-Ausstoß eingespart werden). Soll dennoch Material in dem Kunstrasen verarbeitet werden, das mit anderen Materialien (z.B. Sand, Latex, Polyurethan oder Infill-Resten) kontaminiert ist, so kann die zweite Schicht der Folie ein solches Abfallmaterial umfassen. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Der Kunstrasen wird bevorzugt gemäß einem der hier näher erläuterten Verfahren hergestellt.

Die Erfindung wird im Folgenden anhand von in den beigefügten Figuren dargestellten Ausführungsformen erläutert. Es zeigen:
**Fig. 1** eine schematische Seitenansicht einer Vorrichtung zur Durchführung des Verfahrens zur Herstellung eines Kunstrasens gemäß einer Ausführungsform der vorliegenden Erfindung;
**Fig. 2** eine vergrößerte schematische Seitenansicht einer Kalanderwalze und einer Vielzahl von Anpresswalzen der Vorrichtung aus Fig. 1, während der Durchführung des erfindungsgemäßen Verfahrens zur Herstellung eines Kunstrasens;
**Fig. 3** eine schematische Seitenansicht einer Vorrichtung zur Durchführung des Verfahrens zur Herstellung eines Kunstrasens gemäß einer weiteren Ausführungsform der vorliegenden Erfindung;
**Fig. 4** eine vergrößerte schematische Seitenansicht einer Kalanderwalze und einer Vielzahl von Anpresswalzen der Vorrichtung aus Fig. 3, während der Durchführung des erfindungsgemäßen Verfahrens zur Herstellung eines Kunstrasens;
**Fig. 5A** einen Ausschnitt eines getufteten Trägermaterials, das zur Herstellung eines Kunstrasens mit dem erfindungsgemäßen Verfahren verwendet wird, betrachtet von einer Unterseite;
**Fig. 5B** einen Ausschnitt eines Kunstrasens, der mit dem erfindungsgemäßen Verfahren hergestellt ist, betrachtet von einer Unterseite;
**Fig. 5C** eine schematische Darstellung eines Kunstrasens, der mit dem erfindungsgemäßen Verfahren hergestellt ist, betrachtet von einer Unterseite;
**Fig. 6** eine schematische Seitenansicht von einem Ausschnitt eines Kunstrasens, der mit dem erfindungsgemäßen Verfahren hergestellt ist; und
**Fig. 7** eine schematische Detailansicht, des mit A markierten Bereichs aus Fig. 6.

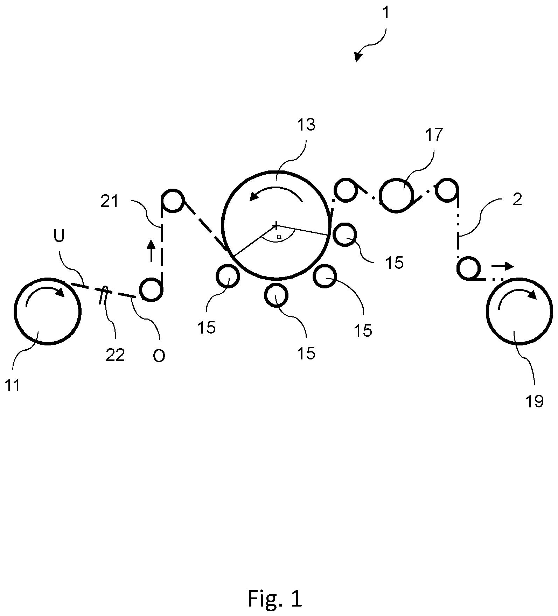

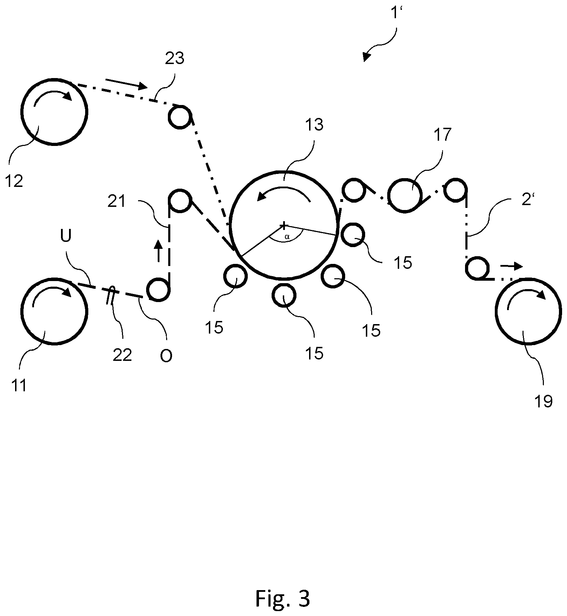

In den Figuren 1 und 3 werden das Trägermaterial 21 mit einer gestrichelten Linie, die Folie 23 mit einer Strichpunktlinie mit einem Punkt, und der Kunstrasen 2, 2' mit einer Strichpunktlinie mit zwei Punkten dargestellt.

Die in der Fig. 1 gezeigte Vorrichtung 1 umfasst in der dargestellten Ausführungsform eine Magazinrolle 11 für Trägermaterial 21, eine Vielzahl von Umlenkrollen, eine Kalanderwalze 13, eine Vielzahl von Anpresswalzen 15, zumindest eine Kühlrolle 17, sowie eine Magazinrolle 19 für Kunstrasen 2.

Das Trägermaterial 21 ist auf der Magazinrolle 11 bereitgestellt. Vorzugsweise umfasst das Trägermaterial 21 eine Gewebestruktur aus beispielsweise PE und/oder PP (so genannte PE- und/oder PP-Trägerbändchen vom Typ Slit Film), die für z.B. Regenwasser durchlässig.

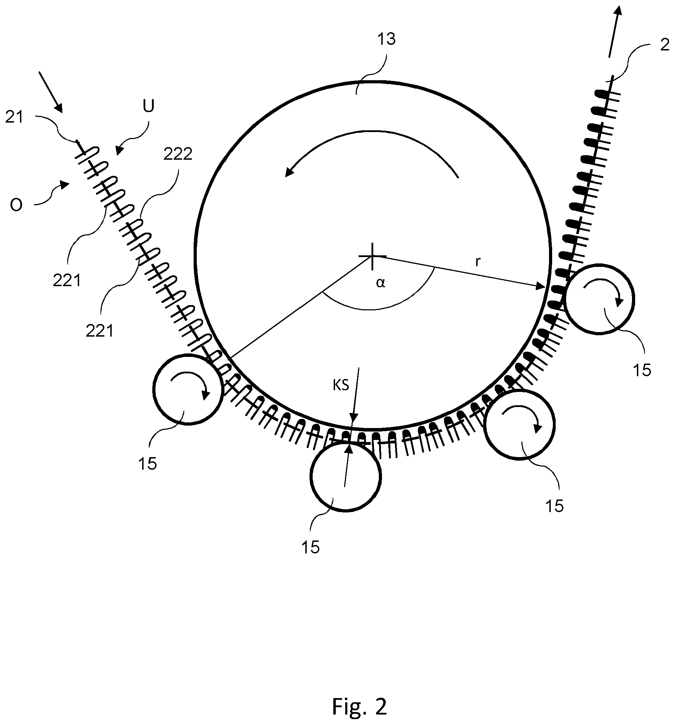

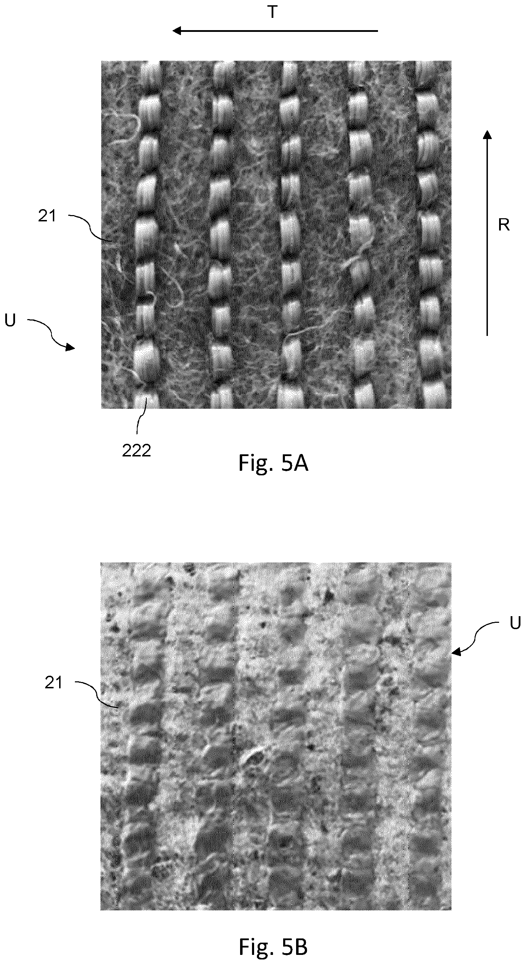

Ebenfalls kann das Trägermaterial 21 eine Gewebestruktur aus co-extrudierten Monofilamenten und Bändchen bestehen, um Materialien mit unterschiedlichen Schmelzpunkten vorteilhaft kombinieren zu können. Das Trägermaterial 21 umfasst eine Oberseite O und eine Unterseite U und ist mit einer Vielzahl von Fasern 22 versehen. Aus Darstellungsgründen ist in der Fig. 1 exemplarisch lediglich eine Faser 22 dargestellt. Wie in der Fig. 2 dargestellt ist, umfasst jede Faser 22 zwei freie Enden 221, welche sich von der Oberseite O des Trägermaterials 21 erstrecken, und einen verbundenen Bereich 222, welcher an der Unterseite U des Trägermaterials 21 schlaufenartig angeordnet ist. In anderen Worten sind die Fasern 22 zunächst lose mit den freien Enden 221 in das Trägermaterial 21 hineingesteckt. Diese Anordnung von zumindest einer Faser 22 im Trägermaterial 21 wird als Tuft bezeichnet. Dabei können die Fasern 22 entweder einzeln oder in Bündeln und nach einem gewissen Muster oder ohne ein Muster an dem Trägermaterial 21 angeordnet sein. Ein Trägermaterial 21, welches auf diese Weise mit einer Vielzahl von Fasern 22 versehen ist, wird auch als getuftetes Trägermaterial 21 bezeichnet. In der Fig. 5A ist ein Ausschnitt eines getufteten Trägermaterials 21 von unten gezeigt. Dabei sind die Fasern 22 in Bündeln und in Reihen an dem Trägermaterial 21 angeordnet. Der vertikale Pfeil R gibt eine Reihenrichtung der Tuftreihen an und der horizontale Pfeil T gibt eine Teilungsrichtung an, die im Wesentlichen orthogonal zu der Reihenrichtung ist. Die erkennbaren verbundenen Bereiche 222 der Fasern (auch genannt Faserschlaufen) sind dabei noch nicht fest untereinander und mit dem Trägermaterial 21 (auch genannt Backing) verbunden.

Von der Magazinrolle 11 wird das getuftete Trägermaterial 21 abgerollt und über Umlenkrollen in Richtung der Kalanderwalze 13 geführt, was durch einen Pfeil entlang des Trägermaterials 21 auf der linken Seite in den Figuren 1 und 2 dargestellt ist.

Die Kalanderwalze 13 weist einen vorbestimmten Radius r auf und wird über einen Motor (nicht dargestellt) rotatorisch angetrieben, wobei die Drehrichtung der Kalanderwalze 13 in den Figuren 1 und 2 durch einen Pfeil entgegen des Uhrzeigersinns dargestellt ist. Die Umdrehungsgeschwindigkeit der Kalanderwalze 13 ist dabei anpassbar. Ferner ist die Kalanderwalze 13 beheizbar (beispielsweise über ein integriertes Heizsystem, nicht dargestellt), wodurch die Oberfläche der Kalanderwalze 13 auf eine vorbestimmte Temperatur erwärmt werden kann. In der in den Figuren 1 und 2 dargestellten Ausführungsform sind benachbart zu der Kalanderwalze 13 mehrere Anpresswalzen 15 in einem vorbestimmten anpassbaren Abstand zu der Kalanderwalze 13, nachfolgend als Kalanderspalt KS bezeichnet, angeordnet. Die Anpresswalzen 15 sind im Wesentlichen achsenparallel zu der Rotationsachse der Kalanderwalze 13 angeordnet und ebenfalls rotierbar gelagert, wobei die Drehrichtung der Anpresswalzen 15 in der Fig. 2 durch Pfeile im Uhrzeigersinn dargestellt ist. Die Anpresswalzen 15 in der beschriebenen Ausführungsform können sowohl passive Anpresswalzen (nicht angetrieben) als auch aktive Anpresswalzen (rotatorisch angetrieben) sein.

Das getuftete Trägermaterial 21 wird auf die rotierende und beheizte Kalanderwalze 13 geführt. Die Unterseite U des Trägermaterials 21 und die verbundenen Bereiche 222 der Fasern 22 sind dabei der Oberfläche der Kalanderwalze 13 zugewandt und die Oberseite O des Trägermaterials 21 und freien Enden 221 der Fasern 22 sind von der Oberfläche der Kalanderwalze 13 abgewandt. Das Trägermaterial 21 wird zwischen der Oberfläche der Kalanderwalze 13 und den Anpresswalzen 15 geführt. Dabei können die Anpresswalzen 15 einen Druck auf das Trägermaterial 21 und die Fasern 22 ausüben, der durch eine Anpassung des Kalanderspalts KS verändert werden kann. Wie in den Figuren 1 und 2 gezeigt ist, wird das getuftete Trägermaterial 21 über einen vorbestimmten Teilbereich der Manteloberfläche der Kalanderwalze 13 geführt, welcher über den Winkel α definiert ist. In anderen Worten kommt das Trägermaterial 21 mit der Vielzahl von Fasern 22 in einem vorbestimmten Mantelflächensegment, das durch den Winkel α definiert wird, mit der Oberfläche der Kalanderwalze 13 in Kontakt. Dieser Winkel α kann durch eine Anpassung der Anordnung der Umlenkrollen relativ zu der Kalanderwalze 13 verändert werden.

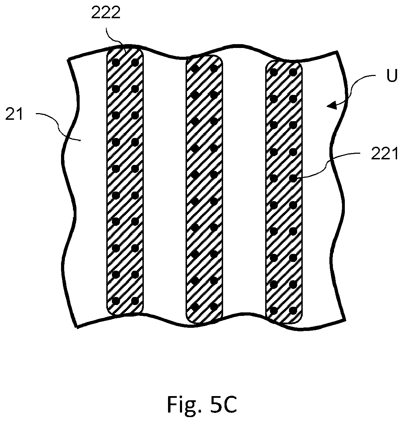

Während das getuftete Trägermaterial 21 über die Kalanderwalze 13 geführt wird, überträgt die Kalanderwalze 13 Wärme an die Unterseite U des Trägermaterials 21 und an die verbundenen Bereiche 222 der Fasern 22, um sie miteinander zu verschmelzen. Die Festigkeit der Verbindung zwischen den Fasern 22 und dem Trägermaterial 21 wird im Wesentlichen von der Temperatur der Kalanderwalze 21, der Umdrehungsgeschwindigkeit der Kalanderwalze 21, dem Winkel α, sowie dem von den Anpresswalzen 15 auf das Trägermaterial 21 und die Fasern 22 ausgeübten Druck beeinflusst. Die Temperatur an der Oberfläche der Kalanderwalze 13 ist größer oder gleich der Schmelztemperaturen des Trägermaterials 21 und der Fasern 22 eingestellt, so dass die verbundenen Bereiche der Fasern 22 mit der Unterseite U des Trägermaterials 21 verschmolzen werden und den Kunstrasen 2 bilden. Die Umdrehungsgeschwindigkeit der Kalanderwalze 13 bestimmt zusammen mit dem Radius r und dem Winkel α im Wesentlichen die Verweilzeit. Die Verweilzeit ist diejenige Zeit, in der das getuftete Trägermaterial 21 mit der Kalanderwalze 13 in Kontakt steht und Wärmeenergie von der Kalanderwalze 13 aufnehmen kann. Mit fortschreitender Verweilzeit des getufteten Trägermaterials 21 auf der Kalanderwalze 13 bildet sich zunehmend eine Schmelzverbindung zwischen dem Trägermaterial 21 und den verbundenen Bereichen 222 der Fasern 22 aus. Eine längere Verweilzeit des getufteten Trägermaterials 21 auf der Kalanderwalze 13 führt dabei zu einer höheren Festigkeit der Schmelzverbindung, was in der Fig. 2 durch den größer werdenden verschmolzenen Bereich (schwarzer Bereich an der Unterseite U des getufteten Trägermaterials 21) dargestellt ist. Der Druck von den Anpresswalzen 15 gegen das getuftete Trägermaterial 21 in Richtung der Kalanderwalze beeinflusst ebenfalls die Festigkeit und die Qualität der Verbindung zwischen den Fasern 22 und dem Trägermaterial 21. Ein höherer Anpressdruck kann das Verschmelzen zwischen Fasern 22 und Trägermaterial 21 beschleunigen und die Verbindung zwischen den Fasern 22 und dem Trägermaterial 21 stärken. Zudem wird durch den von den Anpresswalzen 15 bereitgestellten Anpressdruck Luft aus dem Verbund zwischen Trägermaterial 21 und Fasern 22 herausgedrückt. Die vorstehend genannten Prozessparameter werden vorzugsweise derart eingestellt, dass die Schmelzverbindung zwischen den verbundenen Bereichen 222 und dem Trägermaterial 21 beim Verlassen des Kunstrasens 2 von der Kalanderwalze 13 vollständig ausgebildet ist. Die Unterseite U eines Trägermaterials 21, bei dem die verbundenen Bereiche 222 der Fasern 22 mit dem Trägermaterial 21 verschmolzen sind und somit den Kunstrasen 2 bilden, ist in der Fig. 5B gezeigt. Es ist zu beachten, dass sich bei dem in der Fig. 5B gezeigten Kunstrasen, der mit dem erfindungsgemäßen Verfahren hergestellt ist, durch das Verschmelzen Reihen gebildet haben, indem sich benachbarte Faserbündel miteinander verschmolzen haben. Dies wirkt sich ebenfalls positiv auf die Auszugfestigkeit aus. In der Fig. 5C ist zudem eine schematische geschnittene Ansicht des Kunstrasens 2 aus Fig. 5B gezeigt. Die Reihen, die sich durch das Verschmelzen der Fasern 22 mit dem Trägermaterial 21 gebildet haben, sind schraffiert dargestellt. In dieser geschnittenen Ansicht sind die freiliegenden Enden 221 als schwarze Punkte dargestellt.

Nachdem die verbundenen Bereiche 222 der Fasern 22 mit der Unterseite U des Trägermaterials 21 verschmolzen sind, wird der Kunstrasen 2 von der Kalanderwalze 13 weggeführt und abgekühlt. Wie in der Fig. 1 dargestellt ist, kann der Kunstrasen 2 durch ein Führen des Kunstrasens 2 über eine rotierende Kühlrolle 17 gekühlt werden. Dabei kann die Kühlrolle 17 entweder passiv kühlend (z.B. Raumtemperatur oder darüber) wirken oder aktiv kühlend wirken, wobei die aktiv gekühlte Kühlrolle 17 über ein Kühlaggregat (nicht dargestellt) auf eine vorbestimmte Temperatur unterhalb der Raumtemperatur gekühlt wird. Der gekühlte Kunstrasen 2 wird anschließend von der Kühlrolle 17 weggeführt und auf einer Magazinrolle 19 für Kunstrasen 2 aufgerollt und magaziniert.

Die in der Fig. 3 gezeigte Vorrichtung 1' umfasst in der dargestellten Ausführungsform eine Magazinrolle 11 für Trägermaterial 21, eine Magazinrolle 12 für eine Folie 23, eine Vielzahl von Umlenkrollen, eine Kalanderwalze 13, eine Vielzahl von Anpresswalzen 15, zumindest eine Kühlrolle 17, sowie eine Magazinrolle 19 für Kunstrasen 2'. Die Schritte des Bereitstellens eines Trägermaterials 21, des Bereitstellens einer Vielzahl von Fasern 22 und des Zuführens des Trägermaterials 21 mit den Fasern 22 zu einer beheizten rotierenden Kalanderwalze 13 sind im Wesentlichen identisch mit der vorstehend beschriebenen Ausführungsform, die in den Figuren 1 und 2 gezeigt wird, weshalb auf eine wiederholte Beschreibung dieser Schritte verzichtet wird.

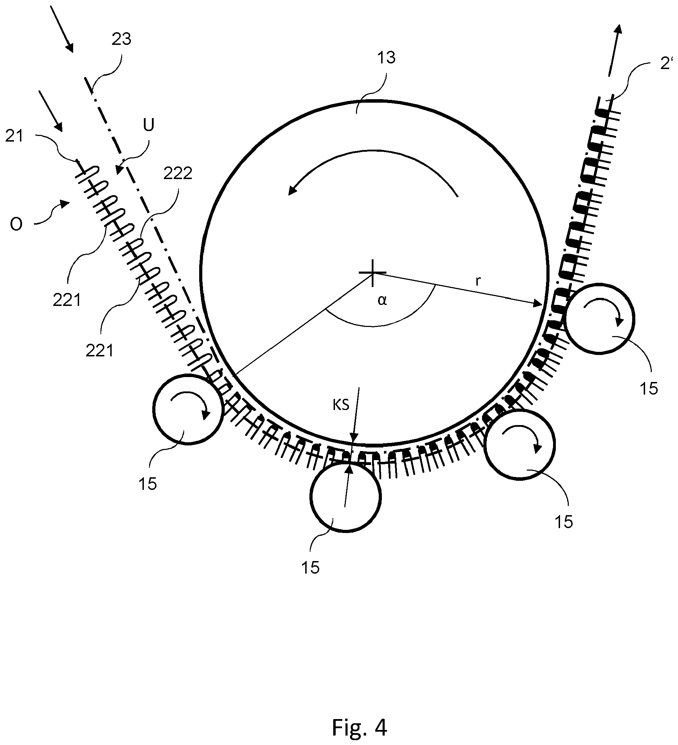

Wie in den Figuren 3 und 4 dargestellt ist, wird neben dem getufteten Trägermaterial 21 eine Folie 23 von der Magazinrolle 12 abgerollt und über Umlenkrollen zu der beheizten rotierenden Kalanderwalze 13 zugeführt, was durch einen Pfeil auf der linken Seite in den Figuren 3 und 4 dargestellt ist.

Die Folie 23 wird dabei an der Unterseite des getufteten Trägermaterials 21 geführt. Die Unterseite U des Trägermaterials 21 und die verbundenen Bereiche 222 der Fasern 22 sind der Oberfläche der Kalanderwalze 13 zugewandt, die Oberseite O des Trägermaterials 21 und freien Enden 221 der Fasern 22 sind von der Oberfläche der Kalanderwalze 13 abgewandt und die Folie 23 liegt zwischen der Unterseite U des getufteten Trägermaterials 21 und der Kalanderwalze 13. Das Trägermaterial 21 und die Folie 23 werden zwischen der Oberfläche der Kalanderwalze 13 und den Anpresswalzen 15 geführt. Dabei können die Anpresswalzen 15 einen Druck auf das getuftete Trägermaterial 21 und die Folie 23 ausüben, der durch eine Anpassung des Kalanderspalts KS verändert werden kann. Wie in den Figuren 3 und 4 gezeigt ist, werden das getuftete Trägermaterial 21 und die Folie 23 über einen vorbestimmten Teilbereich der Manteloberfläche der Kalanderwalze 13 geführt, welcher über den Winkel α definiert ist. In anderen Worten kommt das Trägermaterial 21 mit der Vielzahl von Fasern 22 und der Folie 23 in einem vorbestimmten Mantelflächensegment, das durch den Winkel α definiert wird, mit der Oberfläche der Kalanderwalze 13 in Kontakt. Dieser Winkel α kann durch eine Anpassung der Anordnung der Umlenkrollen relativ zu der Kalanderwalze 13 verändert werden.

Während das getuftete Trägermaterial 21 und die Folie 23 über die Kalanderwalze 13 geführt werden, überträgt die Kalanderwalze 13 Wärme an die Folie 23, die Unterseite U des Trägermaterials 21 und an die verbundenen Bereiche 222 der Fasern 22, um sie miteinander zu verschmelzen. Die Temperatur an der Oberfläche der Kalanderwalze 13 ist größer oder gleich den Schmelztemperaturen der Folie 23, des Trägermaterials 21 und der Fasern 22 eingestellt. Dadurch werden einerseits die verbundenen Bereiche der Fasern 22 mit der Unterseite U des Trägermaterials 21 verschmolzen. Andererseits wird in der in den Figuren 3 und 4 dargestellten Ausführungsform auch die Folie 23 sowohl mit der Unterseite U des Trägermaterials 21 als auch mit den verbundenen Bereichen der Fasern 22 verschmolzen. Mit fortschreitender Verweilzeit des getufteten Trägermaterials 21 und der Folie 23 auf der Kalanderwalze 13 bildet sich zunehmend eine Schmelzverbindung zwischen dem Trägermaterial 21, den verbundenen Bereichen 222 der Fasern 22 und der Folie 23 aus, wodurch der Kunstrasen 2' gebildet wird. Eine längere Verweilzeit des getufteten Trägermaterials 21 und der Folie 23 auf der Kalanderwalze 13 führt dabei zu einer höheren Festigkeit und Qualität der Schmelzverbindung, was in der Fig. 4 durch den größer werdenden verschmolzenen Bereich (schwarzer Bereich an der Unterseite U des getufteten Trägermaterials 21) dargestellt ist. Ein höherer Anpressdruck kann das Verschmelzen zwischen den Fasern 22, dem Trägermaterial 21 und der Folie 23 beschleunigen und die Verbindung zwischen den Fasern 22, dem Trägermaterial 21 und der Folie 23 stärken. Zudem wird durch den von den Anpresswalzen 15 bereitgestellten Anpressdruck Luft aus dem Verbund zwischen dem Trägermaterial 21, den Fasern 22 und der Folie 23 herausgedrückt. Die vorstehend genannten Prozessparameter werden vorzugsweise derart eingestellt, dass die Schmelzverbindung zwischen den verbundenen Bereichen 222, dem Trägermaterial 21 und der Folie 23 beim Verlassen des Kunstrasens 2' von der Kalanderwalze 13 vollständig ausgebildet ist.

Die vorstehend genannten Prozessparameter werden vorzugsweise derart eingestellt, dass die Schmelzverbindung zwischen den verbundenen Bereichen 222, dem Trägermaterial 21 und der Folie 23 beim Verlassen des Kunstrasens 2' von der Kalanderwalze 13 vollständig ausgebildet ist. Zusätzlich zu den vorstehend beschriebenen Prozessparametern beeinflusst die Folie 23 die Festigkeit der Verbindung zwischen den Fasern 22 und dem Trägermaterial 21. Da sich die Folie 23 lokal sowohl mit dem Trägermaterial 21 als auch mit den verbundenen Bereichen 222 Fasern 22 verbindet, wird die Verbindung zwischen dem Trägermaterial 21 und den Fasern 22 verstärkt und die Auszugfestigkeit der Fasern 22 erhöht. Darüber hinaus verbindet sich die Folie 23 global mit dem gesamten Trägermaterial 21 wodurch auch die Stabilität des Trägermaterials 21 erhöht wird.

Nachdem die verbundenen Bereiche 222 der Fasern 22, die Unterseite U des Trägermaterials 21 und die Folie 23 verschmolzen sind, wird der Kunstrasen 2' von der Kalanderwalze 13 weggeführt und abgekühlt. Der Vorgang des Kühlens des Kunstrasens 2' und des Aufrollens und Magazinierens des Kunstrasens 2' auf einer Magazinrolle 19 geschieht analog zu der anhand der Figuren 1 und 2 dargestellten Ausführungsform.

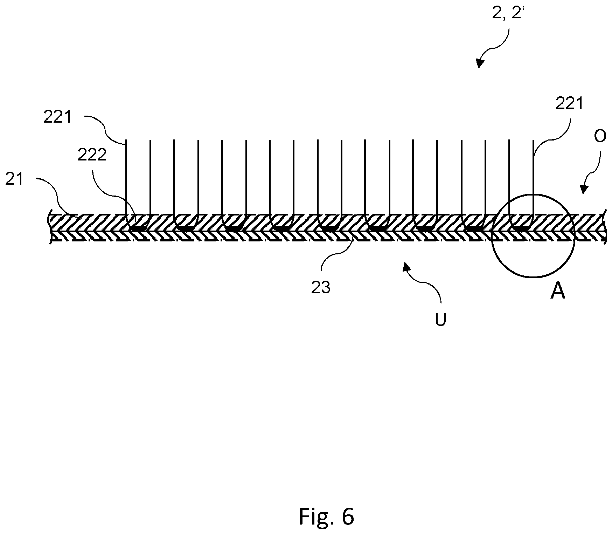

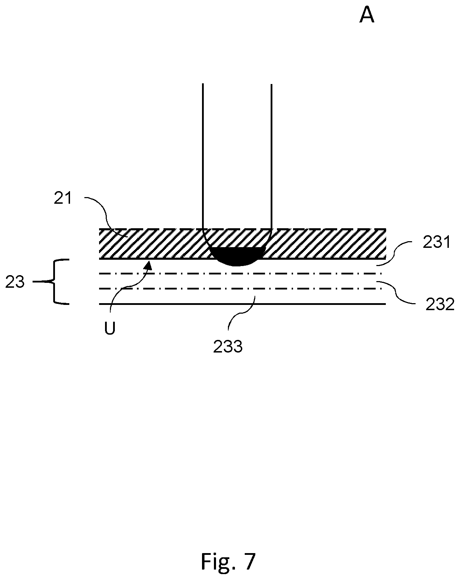

Nachfolgend wird anhand der Figuren 6 und 7 der Aufbau des Kunstrasens 2, 2' gemäß einer Ausführungsform der vorliegenden Erfindung näher beschrieben. In der Fig. 6 ist eine schematische geschnittene Seitenansicht des Kunstrasens 2, 2' gemäß einer Ausführungsform der vorliegenden Erfindung dargestellt. Der erfindungsgemäße Kunstrasen 2, 2' umfasst ein Trägermaterial 21 und eine Vielzahl von darin eingetufteten Fasern 22. Die Fasern 22 umfassen zwei freiliegende Enden 221, die sich von einer Oberfläche O des Trägermaterials 21 erstrecken, sowie einen verbundenen Bereich 222, der an einer Unterseite U des Trägermaterials 21 schlafenartig angeordnet ist. An diesem verbundenen Bereich 222 sind die Fasern 22 mit dem Trägermaterial 21 über eine Schmelzverbindung verbunden, was durch einen dunklen Bereich in den Figuren 6 und 7 dargestellt ist. Das Trägermaterial 21 und die Fasern 22 können im Wesentlichen aus demselben Material gebildet sein und beispielsweise aus PE oder PP bestehen. Die Wahl von denselben Materialien verringert die Anzahl an verschiedenen verwendeten Materialien in dem Kunstrasen 2, 2', was sich positiv auf die Recycelbarkeit und die Umweltverträglichkeit auswirkt. Wie in der Fig. 6 dargestellt ist, kann der Kunstrasen 2, 2' ferner eine Folie 23 umfassen, die an der gesamten Unterseite U des Trägermaterials 21 angeordnet ist. Die Folie 23 ist sowohl mit der Unterseite U des Trägermaterials 21 als auch mit den verbundenen Bereichen 222 der Fasern 22 verbunden. Dadurch wird einerseits die Verbindung zwischen den Fasern 22 und dem Trägermaterial 21 gestärkt, was in der Praxis oftmals anhand der Auszugfestigkeit gemessen wird. Andererseits wird dadurch die Stabilität des gesamten Kunstrasens 2, 2' erhöht.

In Fig. 6 ist die Folie 23 eine einschichtige Folie (auch genannt Monofolie). Die Folie 23 ist dabei mit dem vorstehend beschriebenen erfindungsgemäßen Verfahren angebracht und kann im Wesentlichen aus demselben Material gebildet sein, wie das Trägermaterial 21. Auch die Wahl von denselben Materialien von dem Trägermaterial 21 und der Folie 23 verringert die Anzahl an verschiedenen verwendeten Materialien in dem Kunstrasen 2, 2', was sich ebenfalls positiv auf die Recycelbarkeit und die Umweltverträglichkeit auswirkt. Darüber hinaus kann die Folie 23 aus recyceltem Material, wie zum Beispiel Kunstrasenabfällen von alten Kunstrasen, bestehen. Dies ermöglicht die Realisierung eines geschlossenen Abfallkreislaufs und eine Reduktion des CO2-Ausstoßes des hergestellten Kunstrasens 2, 2'.

Die Fig. 7 stellt eine Detailansicht eines Bereichs A der Fig. 6 gemäß der vorliegenden Erfindung dar. Die Folie 23 ist eine mehrschichtige Folie (auch genannt Co-Extrusionsfolie). Dabei umfasst die Folie 23 eine erste Schicht 231, eine zweite Schicht 232 und eine dritte Schicht 233. Die erste Schicht 231 ist an der Unterseite U des Trägermaterials 21 angeordnet. Die zweite Schicht 232 ist an der ersten Schicht 231 angeordnet und wird von der ersten Schicht 231 und der dritten Schicht 233 umfasst bzw. eingeschlossen. Eine solche dreischichtige Folie 23 kann beispielsweise über das Verfahren der Co-Extrusion hergestellt werden.

Gemäß der vorliegenden Erfindung sind das Trägermaterial 21 und die dritte Schicht 233 aus im Wesentlichen demselben Material gebildet und die zweite Schicht 232 ist aus Kunstrasenabfall oder aus altem Kunstrasen gebildet. Die Verwendung von im Wesentlichen demselben Material bzw. derselben Materialart für das Trägermaterial 21 und die erste Schicht 231 und die dritte Schicht 233 erhöht die Recycelbarkeit des Kunstrasens 2', da in diesem Fall wenig bzw. keine andersartigen Materialien bzw. Materialarten (z.B. Latex, Polyurethan, etc.) in dem Kunstrasen 2' enthalten sind. Um dennoch zu ermöglichen, dass beispielsweise mit Sand, Latex, Polyurethan oder Infill-Resten kontaminiertes Material im Sinne eines geschlossenen Abfallkreislaufs bei der Herstellung des Kunstrasens wiederverwendet werden kann, so kann die zweite Schicht 232 der Folie 23 ein solches Material umfassen. Dies ist insbesondere vorteilhaft, wenn recyceltes Material aus alten Kunstrasen wiederverwendet werden soll, aber z.B. mit Latex kontaminiert ist. Das verschmutzte Abfallmaterial kann somit zwischen zwei im Wesentlichen reinen Schichten eingebunden und stabilisiert werden. So kommt es bei dem Blasfolien-Prozess zum Beispiel nicht zu einem unerwünschten Platzen der Schlauchblase durch Schmutzpartikel.

Die in der Fig. 7 dargestellte erste Schicht 231 kann auch aus einem Material gebildet sein, das modifizierte Adhäsionseigenschaften aufweist. Dabei kann einerseits zu dem vorstehend beschriebenen Material der ersten Schicht 231 ein Haftvermittler zugegeben werden, wobei der Haftvermittler zum Beispiel Maleinsäureanhydrid (MAH) umfassen kann. Andererseits kann ein Material mit schmelzekleberähnlichen Eigenschaften verwendet werden, wie zum Beispiel Ethylen-Vinylacetat (EVA). Auch denkbar ist, dass ein anderes Material als das vorstehend beschriebene mit diesen Haftvermittlern versetzt wird, um die gewünschten modifizierten Adhäsionseigenschaften zu erreichen. Die Verwendung von solchen Materialien bzw. solchen Zusätzen für das Material der ersten Schicht 231 verbessert die Haftung zwischen dem Trägermaterial 21 und der mehrschichtigen Folie 23 und die Stabilität des Kunstrasens 2'.

Nachfolgend werden verschiedene Festigkeits- und Qualitätskennwerte, die in verschiedenen Prüfverfahren ermittelt wurden, in der Tabelle 1 zusammengefasst. Die Dimensions-Stabilität wurde nach dem ASTM Standard gemessen. Der Tuft-Bind wurde nach ISO 4919/EN 15330-1 gemessen. Der Slip-Lock wurde nach ISO 4919 gemessen. Die Festigkeit und die Dehnung wurden nach ISO 13934-1/EN15330-1 gemessen.

In der Tabelle 1 sind verschiedene Kunstrasen tabellarisch aufgeführt. Die Kunstrasen wurden dabei nach verschiedenen Typen (A, B, C und D) kategorisiert. Nicht erfindungsgemäße Kunstrasen wurden mit "Ref" gekennzeichnet und stellen Kunstrasen des jeweiligen Typs gemäß dem Stand der Technik dar, mit welchen die erfindungsgemäßen Kunstrasen verglichen werden (Beispiele A/1 ,A/2, B/2, C/1 und D/2 sind auch "Ref" Beispiele. Beispiele A/3, B/1, C/2 und D/1 sind erfindungsgemäße Kunstrasen).

In der Spalte "Faser(n)" ist angegeben, welche Art und wie viele Fasern in einem Tuft verwendet wurden. Die "Pol-Höhe" gibt an, wie hoch die freien Enden der Fasern aus dem Trägermaterial herausragen. Die Stich-Rate gibt die Anzahl an Tufts an, d.h. an Anordnungen von Fasern mit zwei freien Enden und einem verbundenen Ende, pro 10 cm in einer Reihenrichtung. Mit der "Teilung" wird der Abstand der nebeneinander angeordneten Reihen, d.h. der Abstand von einer Tuft-Reihe zu einer benachbarten Tuft-Reihe, in einer Teilungsrichtung bezeichnet. Üblicherweise wird die Teilung in der Maßeinheit Zoll angegeben. In der Spalte "Beschichtung" ist angegeben, was für eine Beschichtungsart bzw. Folie auf der Unterseite des Trägermaterials angebracht ist.

Die Messergebnisse sind für die jeweiligen Kunstrasen auf der rechten Seite der Tabelle angeführt. Die Dimensions-Stabilität wurde nach einer Temperatursimulation bei 70°C für 24 Stunden nach 48 Stunden bei Raumtemperatur und nach 72 Stunden bei Raumtemperatur gemessen. Sie gibt an, um wie viel Prozent sich zwei vorbestimmte Punkte auf dem Kunstrasen in einer Reihenrichtung (längs) und in einer Richtung orthogonal zu der Reihenrichtung (quer) nach der Wärmebehandlung verlagert haben. Zudem wird in der Tabelle 1 der Mittelwert aus diesen beiden Werten (mittel) angegeben. Unter "Tuft-Bind" wird die benötigte Kraft verstanden, um ein Faserbündel aus dem Kunstrasen herauszuziehen. Unter "Slip-Lock" wird die benötigte Kraft verstanden, um eine einzelne Faser bzw. ein freies Ende aus dem Kunstrasen herauszuziehen. DerSlip-Lockwird nur bei der Verwendung von Mono-Filamenten gemessen, da bei fibrillierten Bändchen keine einzelnen Fasern aus dem Kunstrasen herausgezogen werden können. Mit der "Teppich-Festigkeit" wird die Festigkeit und die Dehnung des gesamten Kunstrasens angegeben.

Wie aus der Tabelle 1 erkennbar ist, sind sowohl bei den erfindungsgemäßen Kunstrasen vom Typ A als auch bei den Kunstrasen vom Typ B sehr ähnlich hohe Festigkeits- und Qualitätskennwerte, wie bei den herkömmlichen Kunstrasen (A/Ref und B/Ref) erzielbar, ohne dass Latex oder Polyurethan verarbeitet wurden. In einigen Messungen übersteigen die Festigkeits- und Qualitätswerte der erfindungsgemäßen Kunstrasen sogar jene der Kunstrasen aus dem Stand der Technik. Die erfindungsgemäßen Kunstrasen von den Typen C und D erreichen ebenfalls übliche Festigkeits- und Qualitätskennwerte. Die mit dem erfindungsgemäßen Verfahren hergestellten Kunstrasen weisen somit eine hohe Qualität und Recycelbarkeit auf.

**Tabelle 1: Messergebnisse Festigkeits- und Qualitätskennwerte verschiedener Kunstrasen**

| **Typ/Nummer** | **Faser(n)** | **Pol-Höhe [mm]** | **Stich-Rate** | **Teilung ["]** | **Beschichtung** | **Dimensions-Stabilität [%]** | | | | | | **Tuft Bind [N]** | **Slip Lock [N] Glattgarn** | **Teppich-Festigkeit (Grap Tear)** | |
|---|---|---|---|---|---|---|---|---|---|---|---|---|---|---|---|
| | | | | | | 72h/70°C nach 24h | | | nach 48h | | | | | Mittelwerte | |
| | | | | | | längs | quer | mittel | längs | quer | mittel | Mittelwert | Mittelwert | Festigkeit [N/mm] | Dehnung [%] |
| A/1 | 1 fibriliertes Bändchen | 55 | 14 | 3/4 (19,04mm) | 150µm Blasfolie mono, 100% Produktionsabfall (PE-PA) | -0,4 | -0,1 | -0,2 | -0,4 | -0,1 | -0,2 | 44,9 | - | 25,0 | 0,10 |
| A/2 | 1 fibriliertes Bändchen | 55 | 14 | 3/4 | 150µm Blasfolie 3-Schicht, 100% Neuware | -0,4 | -0,1 | -0,2 | -0,4 | -0,1 | -0,2 | 45,2 | - | 25,2 | 0,10 |
| A/3 | 1 fibriliertes Bändchen | 55 | 14 | 3/4 | 180 µm Blasfolie 3-Schicht MAH, 15% EOL, 85% PE-PA | -0,2 | -0,1 | -0,1 | -0,2 | -0,1 | -0,2 | 48,2 | - | 26,1 | 0,10 |
| A/Ref | 1 fibriliertes Bändchen | 55 | 14 | 3/4 | Polyurethan -> Referenz Standard | -0,1 | -0,3 | -0,2 | -0,1 | -0,1 | -0,1 | 40,8 | - | 30,8 | 0,09 |
| B/1 | 1 fibriliertes Bändchen und 4x Monofilament texturiert | 30 | 17 | 3/8 | 180 µm Blasfolie 3-Schicht, 15% EOL, 85% PE-PA | -0,2 | -0,1 | -0,1 | -0,2 | 0,0 | -0,1 | 68,1 | 46,4 | 20,1 | 0,11 |
| B/2 | 1 fibriliertes Bändchen und 4x Monofilament texturiert | 30 | 17 | 3/8 | 450 µm Flachfolie mono, 100% PE-PA | -0,2 | -0,1 | -0,1 | -0,3 | -0,1 | -0,2 | 70,3 | 47,1 | 25,8 | 0,12 |
| B/Ref | 1 fibriliertes Bändchen und 4x Monofilament texturiert | 30 | 17 | 3/8 | Latex -> Referenz Standard | 0,0 | 0,0 | 0,0 | 0,0 | 0,0 | 0,0 | 79,9 | 43,7 | 28,6 | 0,10 |
| C/1 | 8x Monofilament Glattgarn und 8x Monofilament texturiert | 40 | 15 | 3/8 (9,52mm) | 550 µm Flachfolie mono, 30% EOL, 70% PE-PA | -0,3 | -0,2 | -0,3 | -0,3 | -0,1 | -0,2 | 51,2 | 9,03 | 17,4 | 0,11 |
| C/2 | 8x Monofilament Glattgarn und 8x Monofilament texturiert | 40 | 15 | 3/8 | 180 µm Blasfolie 3-Schicht EVA, 15% EOL, 85% PE-PA | -0,2 | -0,1 | -0,2 | -0,2 | -0,1 | -0,2 | 49,4 | 8,92 | 15,8 | 0,10 |
| D/1 | 1 fibriliertes Bändchen | 16 | 22 | 3/16 (4,76mm) | 650 µm Flachfolie 3-Schicht MAH, 50% EOL, 50% PE-PA | -0,3 | -0,2 | -0,3 | -0,4 | -0,2 | -0,3 | 30,7 | - | 16,6 | 0,10 |
| D/2 | 1 fibriliertes Bändchen | 16 | 22 | 3/16 | 700 µm Flachfolie mono, 50% EOL, 50% PE-PA | -0,3 | 0,2 | -0,1 | -0,4 | 0,2 | -0,1 | 30,1 | - | 17,5 | 0,12 |

Vorstehend wurde der Fall betrachtet, dass das Trägermaterial, die Fasern und die Folie jeweils aus Kunststoffen bestehen. Im Sinne der Erfindung können das Trägermaterial, die Fasern und die Folie auch aus anderen Materialien (z.B. organische Materialien) bestehen als den hierin genannten.

Im Sinne der Erfindung schließt der Begriff Kunstrasen auch sämtliche sonstige flächige Vorrichtungen bzw. Produkte ein, die eine oder mehrere faserartige hervorstehende Elemente aufweist und erfindungsgemäß hergestellt sind.

Weitere vorteilhafte Ausgestaltungen und Abwandlungen ergeben sich für den Fachmann aus den hier beschriebenen Ausführungsbeispielen und werden von ihm als zur Erfindung gehörig verstanden.

## Patentansprüche

1. Verfahren zur Herstellung eines Kunstrasens (2), umfassend die folgenden Schritte:
Bereitstellen eines Trägermaterials (21) mit einer Oberseite (O) und einer Unterseite (U);
Bereitstellen von einer Vielzahl von Fasern (22), wobei jede Faser (22) zwei Enden (221) umfasst, welche sich von der Oberseite (O) des Trägermaterials (21) erstrecken, und einen verbundenen Bereich (222) umfasst, welcher an der Unterseite (U) des Trägermaterials (21) schlaufenartig angeordnet ist;
Bereitstellen einer Folie (23);
wobei die Folie (23) eine erste Schicht (231), eine zweite Schicht (232) und eine dritte Schicht (233) umfasst,
wobei das Trägermaterial (21) und die erste Schicht (231) und die dritte Schicht (233) aus im Wesentlichen derselben Materialart gebildet sind,
wobei die zweite Schicht (232) recycelten Kunstrasenabfall umfasst;
Zuführen des Trägermaterials (21) mit den Fasern (22) zu einer beheizten rotierenden Kalanderwalze (13);
wobei die Folie (23) zwischen der Unterseite (U) des Trägermaterials (21) mit den verbundenen Bereichen (222) der Fasern (22) und der beheizten rotierenden Kalanderwalze (13) zugeführt wird,
Führen des Trägermaterials (21) mit den Fasern (22) über zumindest einen Teilbereich der Oberfläche der beheizten rotierenden Kalanderwalze (13), wobei die verbundenen Bereiche (222) der Fasern (22) und die Unterseite (U) des Trägermaterials (21) der Kalanderwalze (13) zugewandt sind;
während des Führens des Trägermaterials (21) mit den Fasern (22) über den zumindest einen Teilbereich der Oberfläche der beheizten rotierenden Kalanderwalze (13):
Übertragen von Wärme von der beheizten rotierenden Kalanderwalze (13) zu dem Trägermaterial (21) mit den Fasern (22), und
Verschmelzen der verbundenen Bereiche (222) der Fasern (22) mit der Unterseite (U) des Trägermaterials (21), und der Folie (23) mit der Unterseite (U) des Trägermaterials (21) und mit den verbundenen Bereichen (222) der Fasern (22) zu dem Kunstrasen (2); und
Abführen und Abkühlen des Kunstrasens (2).

2. Verfahren zur Herstellung eines Kunstrasens (2) nach Anspruch 1,
wobei bei dem Schritt des Führens zumindest eine rotierende Anpresswalze (15) um einen Kalanderspalt (KS) beabstandet und im Wesentlichen achsenparallel zu der Kalanderwalze (13) angeordnet ist,
wobei die Anpresswalze (15) das Trägermaterial (21) mit den Fasern (22) gegen die beheizte rotierende Kalanderwalze (13) mit einer vorbestimmten Anpresskraft presst.

3. Verfahren zur Herstellung eines Kunstrasens (2) nach Anspruch 1,
wobei bei dem Schritt des Führens zumindest eine rotierende Anpresswalze (15) um einen Kalanderspalt (KS) beabstandet und im Wesentlichen achsenparallel zu der Kalanderwalze (13) angeordnet ist,
wobei die Anpresswalze (15) das Trägermaterial (21) mit den Fasern (22) und der Folie (23) gegen die beheizte rotierende Kalanderwalze (13) mit einer vorbestimmten Anpresskraft presst.

4. Verfahren zur Herstellung eines Kunstrasens (2) nach einem der vorhergehenden Ansprüche, wobei das Trägermaterial (21) und die Fasern (22) aus im Wesentlichen derselben Materialart gebildet sind.

5. Verfahren zur Herstellung eines Kunstrasens (2) nach einem der Ansprüche 1 bis 4, wobei das Trägermaterial (21) und die Folie (23) aus im Wesentlichen derselben Materialart gebildet sind.

6. Verfahren zur Herstellung eines Kunstrasens (2) nach einem der vorhergehenden Ansprüche, wobei das Trägermaterial (21) recyceltes und recycelbares Material umfasst und/oder die Fasern (22) recyceltes und recycelbares Material umfassen.

7. Verfahren zur Herstellung eines Kunstrasens (2) nach einem der Ansprüche 1 bis 6, wobei die Folie (23) recyceltes und recycelbares Material umfasst.

8. Verfahren zur Herstellung eines Kunstrasens (2) nach einem der Ansprüche 1 bis 7, wobei die Folie (23) eine erste Schicht (231), eine zweite Schicht (232) und eine dritte Schicht (233) umfasst,
wobei die erste Schicht (231) einen Haftvermittler umfasst,
wobei das Trägermaterial (21) und die dritte Schicht (233) aus im Wesentlichen demselben Material gebildet sind, und
wobei die zweite Schicht (232) recycelten Kunstrasenabfall umfasst.

9. Kunstrasen (2), umfassend:
ein Trägermaterial (21) mit einer Oberseite (O) und einer Unterseite (U);
eine Vielzahl von Fasern (22), wobei jede Faser (22) zwei Enden (221) umfasst, welche sich von der Oberseite (O) des Trägermaterials (21) erstrecken, und einen verbundenen Bereich (222) umfasst, welcher an der Unterseite (U) des Trägermaterials (21) schlaufenartig angeordnet ist;
wobei das Trägermaterial (21) an der Unterseite (U) mit den verbundenen Bereichen (222) der Fasern (22) verschmolzen ist: und
eine Folie (23),
wobei die Folie (23) mit der Unterseite (U) des Trägermaterials (21) und mit den verbundenen Bereichen (222) der Fasern (22) verschmolzen ist;
wobei die Folie (23) eine erste Schicht (231), eine zweite Schicht (232) und eine dritte Schicht (233) umfasst,
wobei das Trägermaterial (21) und die erste Schicht (231) und die dritte Schicht (233) aus im Wesentlichen demselben Material gebildet sind,
wobei die zweite Schicht (232) recycelten Kunstrasenabfall umfasst.

10. Kunstrasen (2) nach Anspruch 9,
wobei die Folie (23) eine erste Schicht (231), eine zweite Schicht (232) und eine dritte Schicht (233) umfasst,
wobei die erste Schicht (231) einen Haftvermittler umfasst,
wobei das Trägermaterial (21) und die dritte Schicht (233) aus im Wesentlichen demselben Material gebildet sind, und
wobei die zweite Schicht (232) recycelten Kunstrasenabfall umfasst.

11. Kunstrasen (2) nach einem der Ansprüche 9 bis 10, wobei der Kunstrasen (2) mit dem Verfahren nach einem der Ansprüche 1 bis 8 hergestellt ist.

## Claims

1. A method for producing an artificial turf (2), comprising the following steps:
providing a carrier material (21) having a top (O) and a bottom (U);
providing a plurality of fibres (22), wherein each fibre (22) comprises two ends (221) extending from the top (O) of the carrier material (21) and comprising a connected region (222) arranged in a loop-like manner at the bottom (U) of the carrier material (21);
providing a film (23);
wherein the film (23) comprises a first layer (231), a second layer (232), and a third layer (233),
wherein the carrier material (21) and the first layer (231) and the third layer (233) are formed from substantially the same type of material,
wherein the second layer (232) comprises recycled artificial turf scrap;
feeding the carrier material (21) with the fibres (22) to a heated rotating calender roller (13);
wherein the film (23) is fed between the bottom (U) of the carrier material (21) with the connected regions (222) of the fibres (22) and the heated rotating calender roller (13);
guiding the carrier material (21) with the fibres (22) over at least one sub-region of the surface of the heated rotating calender roller (13), wherein the connected regions (222) of the fibres (22) and the bottom (U) of the carrier material (21) face the calender roller (13);
during the guiding of the carrier material (21) with the fibres (22) over the at least one sub-region of the surface of the heated rotating calender roller (13):
transferring heat from the heated rotating calender roller (13) to the carrier material (21) with the fibres (22), and
fusing the connected regions (222) of the fibres (22) with the bottom (U) of the carrier material (21), and the film (23) to the bottom (U) of the carrier material (21) and to the connected regions (222) of the fibres (22) to the artificial turf (2); and
removing and cooling the artificial turf (2).

2. The method for producing an artificial turf (2) according to claim 1,
wherein, in the step of guiding, at least one rotating pressure roller (15) is spaced apart by a calender gap (KS) and is arranged substantially axis-parallel to the calender roller (13),
wherein the pressure roller (15) presses the carrier material (21) with the fibres (22) against the heated rotating calender roller (13) with a predetermined pressing force.

3. The method for producing an artificial turf (2) according to claim 1,
wherein, in the step of guiding, at least one rotating pressure roller (15) is spaced apart by a calender gap (KS) and is arranged substantially axis-parallel to the calender roller (13),
wherein the pressure roller (15) presses the carrier material (21) with the fibres (22) and the film (23) against the heated rotating calender roller (13) with a predetermined pressing force.

4. The method for producing an artificial turf (2) according to any one of the preceding claims, wherein the carrier material (21) and fibres (22) are formed from substantially the same type of material.

5. The method for producing an artificial turf (2) according to any one of claims 1 to 4,
wherein the carrier material (21) and the film (23) are formed from substantially the same type of material.

6. The method for producing an artificial turf (2) according to any one of the preceding claims,
wherein the carrier material (21) comprises recycled and recyclable material and/or the fibres (22) comprise recycled and recyclable material.

7. The method for producing an artificial turf (2) according to any one of claims 1 to 6, wherein the film (23) comprises recycled and recyclable material.

8. The method for producing an artificial turf (2) according to any one of claims 1 to 7, wherein the film (23) comprises a first layer (231), a second layer (232), and a third layer (233),
wherein the first layer (231) comprises an adhesion agent,
wherein the carrier material (21) and the third layer (233) are formed from substantially the same material, and
wherein the second layer (232) comprises recycled artificial turf scrap.

9. An artificial turf (2), comprising:
a carrier material (21) having a top (O) and a bottom (U);
a plurality of fibres (22), wherein each fibre (22) comprises two ends (221) extending from the top (O) of the carrier material (21) and comprising a connected region (222) arranged in a loop-like manner at the bottom (U) of the carrier material (21);
wherein the carrier material (21) is fused at the bottom (U) to the connected regions (222) of the fibres (22); and
a film (23),
wherein the film (23) is fused to the bottom (U) of the carrier material (21) and to the connected regions (222) of the fibres (22);
wherein the film (23) comprises a first layer (231), a second layer (232), and a third layer (233),
wherein the carrier material (21) and the first layer (231) and the third layer (233) are formed from substantially the same type of material,
wherein the second layer (232) comprises recycled artificial turf scrap.

10. The artificial turf (2) according to claim 9,
wherein the film (23) comprises a first layer (231), a second layer (232), and a third layer (233),
wherein the first layer (231) comprises an adhesion agent,
wherein the carrier material (21) and the third layer (233) are formed from substantially the same material, and
wherein the second layer (232) comprises recycled artificial turf scrap.

11. The artificial turf (2) of any one of claims 9 to 10, wherein the artificial turf (2) is produced with the method according to any one of claims 1 to 8.

## Revendications

1. Procédé de fabrication d'un gazon artificiel (2), comprenant les étapes suivantes :
prévoir un matériau de support (21) ayant un côté supérieur (O) et un côté inférieur (U) ;
prévoir une pluralité de fibres (22), chaque fibre (22) comprenant deux extrémités (221) s'étendant à partir du côté supérieur (O) du matériau de support (21) et comprenant une partie reliée (222) agencée selon une boucle sur le côté inférieur (U) du matériau de support (21) ;
prévoir un film (23) ;
le film (23) comprenant une première couche (231), une deuxième couche (232) et une troisième couche (233),
le matériau de support (21) et la première couche (231) et la troisième couche (233) étant formés essentiellement du même type de matériau,
la deuxième couche (232) comprenant des déchets de gazon artificiel recyclés ;
amener le matériau de support (21) avec les fibres (22) vers un rouleau de calandre rotatif chauffé (13) ;
le film (23) est amené entre le côté inférieur (U) du matériau de support (21) avec les zones reliées (222) des fibres (22) et le rouleau de calandre rotatif chauffé (13),
guider le matériau de support (21) avec les fibres (22) sur au moins une partie de la surface du rouleau de calandre rotatif chauffé (13), les zones reliées (222) des fibres (22) et le côté inférieur (U) du matériau de support (21) étant tournées vers le rouleau de calandre (13) ;
tout en guidant le matériau de support (21) avec les fibres (22) sur ladite au moins une partie de la surface du rouleau de calandre rotatif chauffé (13) :
transférer la chaleur du rouleau de calandre rotatif chauffé (13) au matériau de support (21) avec les fibres (22), et
fusionner les zones liées (222) des fibres (22) avec le côté inférieur (U) du matériau de support (21), et du film (23) avec le côté inférieur (U) du matériau de support (21) et avec les zones liées (222) des fibres (22) pour former le gazon artificiel (2) ; et
évacuer et refroidir le gazon artificiel (2).

2. Procédé de fabrication d'un gazon artificiel (2) selon la revendication 1,
dans lequel, lors de l'étape de guidage, au moins un rouleau presseur rotatif (15) est espacé d'une emprise de calandre (KS) et est agencé sensiblement parallèlement à l'axe du rouleau de calandre (13),
le rouleau de pression (15) pressant le matériau de support (21) avec les fibres (22) contre le rouleau de calandre rotatif chauffé (13) avec une force de pression prédéterminée.

3. Procédé de fabrication d'un gazon artificiel (2) selon la revendication 1,
dans lequel, lors de l'étape de guidage, au moins un rouleau de pression rotatif (15) est espacé d'une emprise de calandre (KS) et est agencé sensiblement parallèlement à l'axe du rouleau de calandre (13),
le rouleau de pression (15) pressant le matériau de support (21) avec les fibres (22) et le film (23) contre le rouleau de calandre rotatif chauffé (13) avec une force de pression prédéterminée.

4. Procédé de fabrication d'un gazon artificiel (2) selon l'une des revendications précédentes, dans lequel le matériau de support (21) et les fibres (22) sont formés essentiellement à partir du même type de matériau.

5. Procédé de fabrication d'un gazon artificiel (2) selon l'une des revendications 1 à 4, dans lequel le matériau de support (21) et le film (23) sont formés essentiellement à partir du même type de matériau.

6. Procédé de fabrication d'un gazon artificiel (2) selon l'une des revendications précédentes, dans lequel le matériau support (21) comprend un matériau recyclé et recyclable et/ou les fibres (22) comprennent un matériau recyclé et recyclable.

7. Procédé de fabrication d'un gazon artificiel (2) selon l'une des revendications 1 à 6, dans lequel le film (23) comprend un matériau recyclé et recyclable.

8. Procédé de fabrication d'un gazon artificiel (2) selon l'une des revendications 1 à 7, dans lequel le film (23) comprend une première couche (231), une deuxième couche (232) et une troisième couche (233),
la première couche (231) comprenant un agent de liaison,
le matériau de support (21) et la troisième couche (233) étant formés essentiellement à partir du même matériau, et
la deuxième couche (232) comprenant des déchets de gazon artificiel recyclés.

9. Gazon artificiel (2) comprenant :
un matériau de support (21) ayant un côté supérieur (O) et un côté inférieur (U) ;
une pluralité de fibres (22), chaque fibre (22) comprenant deux extrémités (221) qui s'étendent depuis le côté supérieur (O) du matériau de support (21) et comprenant une zone reliée (222) qui est agencée selon une boucle sur le côté inférieur (U) du matériau de support (21) ;
le matériau de support (21) étant fusionné au niveau du côté inférieur (U) avec les parties reliées (222) des fibres (22) ; et
un film (23),
le film (23) étant fusionné avec le côté inférieur (U) du matériau de support (21) et avec les parties reliées (222) des fibres (22) ;
le film (23) comprenant une première couche (231), une deuxième couche (232) et une troisième couche (233),
le matériau de support (21) et la première couche (231) et la troisième couche (233) étant formés sensiblement à partir du même matériau,
la deuxième couche (232) comprenant des déchets de gazon artificiel recyclés.

10. Gazon artificiel (2) selon la revendication 9,
dans lequel le film (23) comprend une première couche (231), une deuxième couche (232) et une troisième couche (233),
la première couche (231) comprenant un agent adhésif,
le matériau de support (21) et la troisième couche (233) étant formés essentiellement du même matériau, et
la deuxième couche (232) comprenant des déchets de gazon artificiel recyclés.

11. Gazon artificiel (2) selon l'une des revendications 9 à 10, dans lequel le gazon artificiel (2) est fabriqué par le procédé selon l'une des revendications 1 à 8.
